# EUROPEAN PATENT APPLICATION

(11) **EP 1 067 750 A2**
(43) Date of publication of application: **10.01.2001**
(21) Application number: 00114515.0
(22) Date of filing: 06.07.2000
(51) Int. Cl.: H04M 1/725, H04M 1/60, H04B 1/38

(54) **Hand-free apparatus for portable telephone utilizing ear phone jack as i/o terminal**

(30) Priority: 06.07.1999 KR 9913145
(71) Applicant: Myoung, Tae Sung, Seoul (KR); Chang, Chul Hong, Kyunggi-do (KR)
(72) Inventor: Myoung, Tae Sung, Seoul (KR); Chang, Chul Hong, Kyunggi-do (KR)
(74) Representative: Dr. Weitzel & Partner

(57) **Abstract**

Disclosed is a hand-free apparatus for a portable telephone having an earphone jack as an input/output terminal. For transforming user's voice, the hand-free apparatus has a microphone for converting a sound into an electrical signal and a microphone amplifying circuit for amplifying in a high sensitivity an output signal of the microphone. The hand-free apparatus also has a speaker amplifying circuit for amplifying an audio signal transferred from the portable telephone and a speaker for converting an amplified audio signal from the speaker amplifying circuit into a sound. The microphone amplifying circuit and the speaker amplifying circuit have electrical connections with the portable telephone through a signal I/O line. The signal I/O line includes an audio signal line connected to the speaker amplifying circuit, a microphone signal line connected to the microphone amplifying circuit, a ground line, and a plug having terminals each of which is connected to the audio signal line, the microphone signal line and the grounding line respectively. When the plug is inserted into the earphone jack, the signal I/O line transfers an output signal of the microphone amplifying circuit and the audio signal from the portable telephone into the portable telephone and the speaker amplifying circuit, respectively.

## Description

### Background of the Invention

### 1. Field of the Invention

The present invention relates in general to a hand-free apparatus for a portable telephone such as cellular phone, personal service system phone or IMT-2000 etc., and more particularly to a hand-free apparatus which utilizes ear phone jack terminals as input/output terminals for interfacing between the hand-free apparatus and the portable telephone.

### 2. Description of the Prior Art

Nowadays, various hand-free apparatuses are widely used for the purpose of preventing hindrance while driving a car when a driver simultaneously uses his or her portable telephone. The hand-free apparatus, which in general has a microphone, a speaker and an audio signal processing circuit, is a convenient communication assistance tool which allows users to communicate without actually holding the potable telephone.

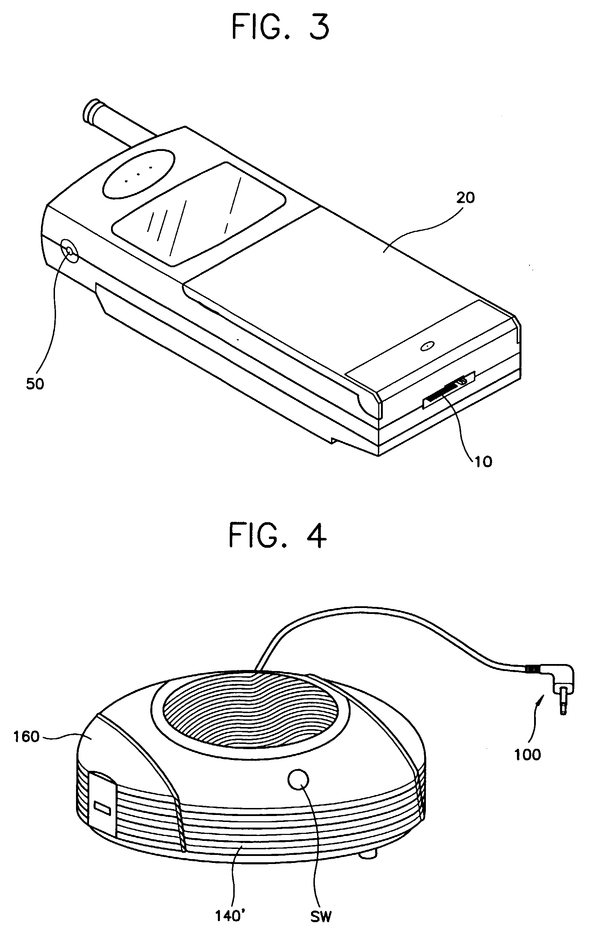

In general, a typical hand-free apparatus, which is shown by FIG. 3, is connected to a connection terminal 10 located at the bottom of the portable telephone as an audio data interface path with a portable telephone 20. However, it is common that the connection terminal 10 varies in signal configuration and layout and differs according to manufacturer and product model. As a result, such type of hand-free apparatus that interfaces the audio signal with a portable telephone through the connection terminal 10 has a limitation in compatibility to a manufacturer or a product model of a portable telephone. That is, it is difficult to manufacture a hand-free apparatus which is universally applicable to all types of portable telephones regardless of the manufacturer or product model. Thus, hand-free apparatus manufacturers are burdened with continuously developing new models of hand-free apparatus which are compatible with ever-changing models of portable telephone, which limits a mass production policy for a low production cost of the hand-free apparatus. As a result an increase in the production cost is passed on to the consumer. Additionally, there is a need for the consumers to purchase a new hand-free apparatus which is compatible with a newly purchased model of portable telephone.

Meanwhile, currently manufactured portable telephones have in general an earphone jack 50. In order to solve the above-mentioned problem there is introduced an earphone type hand-free apparatus for a portable telephone which utilizes the earphone jack 50 as an interfacing path with the portable telephone. This earphone type hand-free apparatus has an ear-insertion type earphone which transforms an audio signal into sound, a microphone extended to around the mouth of a user, and a cable with a plug which serves as signal transfer path between the portable telephone and the earphone type hand-free apparatus by being insertable into the earphone jack.

The earphone type hand-free apparatus can be advantageous in overcoming the limitation of compatibility of the portable telephone in that the earphone type hand-free apparatus communicates with the portable telephone through the earphone jack 50. However, this type of hand-free apparatus is only a mere earphone apparatus and does not provide a convenience of car type hand-free apparatus to a user. That is, for a communicating with the earphone type hand-free apparatus, a user has to be resigned to an irksome work such as inserting the earphone into his or her ear and approaching his or her mouth near the microphone. In view of the hand-free apparatus which is commonly referred to as a communication assistance apparatus for a convenient and safe communication during driving a car, the earphone type hand-free apparatus falls being short of safe and convenient. Since there is no idea when calls are received, a driver must always wear the earphone into his or her ear while driving, which is very inconvenient in itself and may hinder conversation with other passengers or listening to radio broadcasting. Further, frequently the earphone loosens out from the ear. In this case, inserting the earphone into the ear again may hinder safe driving and counters the initial purpose of the hand-free apparatus.

### Summary of the Invention

Therefore, it is an object of the present invention to provide a hand-free apparatus applicable to all types of portable telephone having an earphone jack by interfacing with the portable telephone through the earphone jack thereof and which can allow users to communicate freely and adequately at a position a few meters away from the hand-free apparatus by employing a high performance microphone and a speaker to a case.

In order to accomplish the object of the present invention, there is provided a hand-free apparatus for a portable telephone having an earphone jack, comprising: a microphone for converting a sound into an electrical signal; a microphone amplifying circuit for amplifying in a high sensitivity an output signal of the microphone; a speaker amplifying circuit for amplifying an audio signal transferred from the portable telephone; a speaker for converting an amplified audio signal from the speaker amplifying circuit into a sound; and signal I/O line including an audio signal line connected to the speaker amplifying circuit, a microphone signal line connected to the microphone amplifying circuit, a grounding line, and a plug having terminals each of which is connected to the audio signal line, the microphone signal line and the grounding line respectively, for transferring an output signal of the microphone amplifying circuit and the audio signal from the portable telephone to the portable telephone and the speaker amplifying circuit.

Preferably, the microphone amplifying circuit comprises an amplifying device for amplifying an output sound signal of the microphone and providing an amplified output sound signal to the portable telephone through the microphone signal line; and an impedance matching circuit which is arranged between the amplifying device and the microphone for matching an impedance of the amplifying device side and an inner impedance of the microphone by transferring to the microphone a maximum power out of a source voltage provided through the microphone signal line from the portable telephone so that the microphone can provide the output audio signal in a high sensitivity to the amplifying device. By transferring maximum power to the microphone, the microphone provides the output sound signal to the amplifying device with a high sensitivity.

Preferably, the hand-free apparatus employs a bipolar transistor as the amplifying device. The amplifying device receives an operating voltage through the microphone signal line which is connected to the portable telephone and amplifies the output sound signal of the microphone which is inputted to a base of the bipolar transistor by using the operating voltage. The amplified sound signal is transferred to the portable telephone by way of the microphone signal line.

Further, the hand-free apparatus comprises a case. The microphone and the speaker are installed within the case, and the microphone amplifying circuit and the speaker amplifying circuit are installed on a printed circuit board within the case. The signal I/O line is connected to the printed circuit board and extending out of the case.

According to the hand-free apparatus of the present invention, the microphone amplifying circuit has a very simple circuit and further a wide dynamic range and a low noise factor. Thus, at a few meters away from a speaker, the microphone can easily sense and amplify a voice of the speaker with a high sensitivity, and the voice is transferred clearly to the portable telephone.

### Brief Description of the Drawings

The above objects and other advantages of the present invention will become more apparent by describing in detail preferred embodiments thereof with reference to the attached drawings, in which:
FIG. 1 illustrates a circuit of a hand-free apparatus according to the present invention;
FIG. 2 illustrates an overall configuration of the hand-free apparatus according to the present invention;
FIG. 3 shows a perspective-view of a typical potable telephone having an earphone jack; and
FIG. 4 shows a perspective-view of the hand-free apparatus according to the present invention.

### Description of the Preferred Embodiment

Hereinafter, a preferred embodiment of the present invention will be explained in more detail with reference to the accompanying drawings.

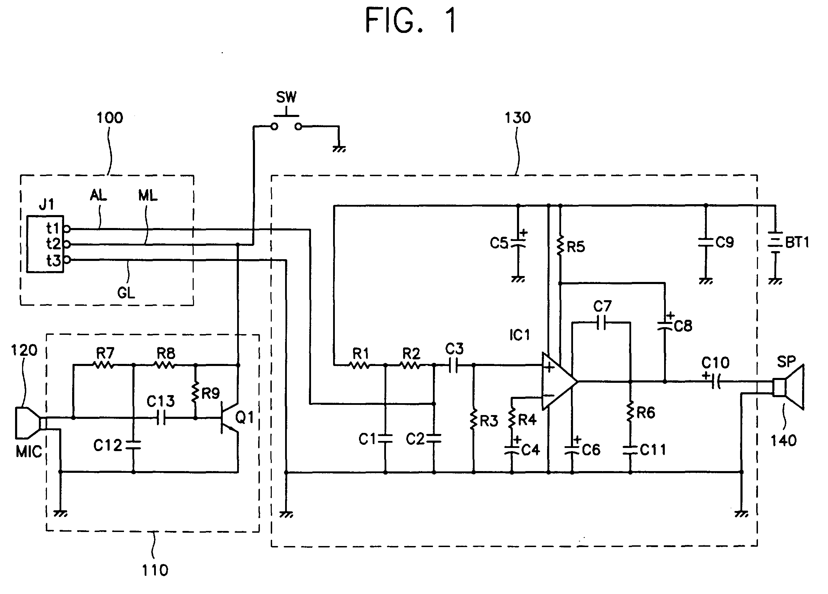

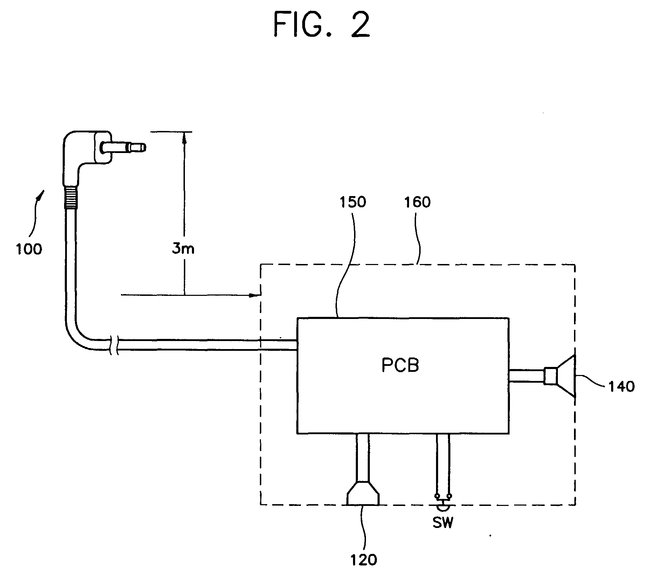

A circuit of a hand-free apparatus according to the present invention is shown by FIG. 1, and an overall configuration of the hand-free apparatus is shown by FIG. 2. The hand-free apparatus includes a microphone 120 which converts a sound into an analog sound signal, a microphone amplifying circuit 110 which amplifies in a high sensitivity the analog sound signal outputted from the microphone 120, a speaker 140 which converts the analog audio signal into a sound, a speaker amplifying circuit 130 which amplifies the analog audio signal and provides an amplified analog audio signal to the speaker, and a signal I/O line 100 which provides a signal traveling path between the hand-free apparatus and a portable telephone 20.

The signal I/O line 100 has a plug J1 connected to signal lines and the plug J1 has at least three connection terminals as follows: an audio signal terminal t1, a microphone signal terminal t2 and a ground terminal t3, each of which is connected to its corresponding an audio signal terminal, a microphone signal terminal and a ground terminal of the earphone jack 50 of the portable telephone 20, respectively. The audio signal terminal t1, the microphone signal terminal t2 and the ground terminal t3 of the plug J1 are connected an audio signal line AL connected to the speaker amplifying circuit 130, a microphone signal line ML connected to the microphone amplifying circuit 110 and a ground line GL, respectively.

The microphone amplifying circuit 110 includes an amplifying device Q1 which amplifies a sound signal outputted from the microphone 120. FIG. 1 illustrates a circuit configuration having a bipolar transistor Q1 which is employed as the amplifying device Q1. The bipolar transistor Q1 is connected to the microphone signal terminal t2 of the signal I/O line 100 by a collector thereof, and an emitter and a base of the bipolar transistor Q1 are connected to ground and an impedance matching circuit, respectively.

The impedance matching circuit is located between the bipolar transistor Q1 and the microphone 120. In detail, the impedance matching circuit has a capacitor C13 for noise rejection, which is connected an output of the microphone 120 and the base of the bipolar transistor Q1. A resistor R9 is connected across the collector and the base of the bipolar transistor Q1, and two serially connected resistors R7 and R8 are connected between the output of the microphone 120 and the collector of the bipolar transistor Q1. An output terminal of the microphone 120 and the emitter of the bipolar transistor Q1 are commonly grounded. A capacitor C12 for rejecting a noise is connected to a connection node of the resistors R7 and R8 and the ground.

The speaker amplifying circuit 130 is arranged between the audio signal and ground lines AL and GL and the speaker 140, and includes an operational amplifier IC1, an auxiliary circuit of the operational amplifier IC1 and a voltage source BT1. the operational amplifier IC1 puts out an amplified audio signal through an output terminal thereof after amplifying in a predetermined gain an audio signal inputted through an input port of inverting and non-inverting terminals by using the voltage source BT1.

In a configuration of the operational amplifying IC1, the non-inverting terminal is connected to the audio signal line AL of the signal I/O line through a noise filter circuit having a capacitor C3 and a resistor R3. Thus, the audio signal from the portable telephone 20 is inputted to the non-inverting terminal of the operational amplifying IC1 through the noise filter circuit C3 and R3. The voltage source BT1 has a connection with the noise filter circuit C3 and R3 by way of an RC circuit including resistors R1, R2 and capacitors C1 and C2 having a cascaded connection with noise rejection capacitors C5 and C9. The filtering circuit regulates a voltage of the voltage source BT1 to provide a suitable voltage to the noise filter circuit C3 and R3, and the audio signal from the portable telephone is transferred to the non-inverting terminal of the operational amplifier IC1 together with the regulated suitable voltage. Further, a biasing circuit having a resistor R4 and a capacitor C4 has a connection with the non-inverting terminal of the operational amplifier IC1, and the operating amplifier IC1is biased to a predetermined voltage by the biasing circuit. The operational amplifier IC1 receives the voltage source BT1 as a driving voltage through a resistor R5.

In the operational amplifier IC1, there are provided an RC circuit R6 and C11 for controlling an output signal level and a capacitor C6 which is connected to the output of the operational amplifier IC1 for bypass filtering. A capacitor C10 is provided to the output of the operational amplifier IC1 to transfer an amplified audio signal to the speaker 140. For the purpose of smoothing of the amplified audio signal, there is further provided smoothing capacitors C7 and C8 as an auxiliary circuit.

In manufacturing the hand-free apparatus, the microphone amplifying circuit 110 and the speaker amplifying circuit 130 are installed on a small size of printed circuit board (PCB) 150 as shown in FIG. 2, and the microphone 120 and the speaker 140 are electrically connected to the PCB 150 and installed within a case 160 which has an opening portion 140' at a side thereof for an efficient transfer of sound. In the signal I/O line, the audio signal line AL, the microphone signal line ML and the ground line are lined several meters and are contained in a single cover, in which one end of the signal I/O line is connected to the plug J1 and the other end extends out of the case 160.

The hand-free apparatus further includes a communication switch SW which provide a switching point between the microphone line ML, the ground and, a button of which is exposedly installed on the case 160.

The operation of the hand-free apparatus of the present invention is described below, If a user pushed the communication button SW upon receiving a call, the portable telephone 20 is changed into a communication mode. A operational voltage of the bipolar transistor Q1 is supplied through the microphone signal line ML from the portable telephone 20. That is, a collector-base voltage of the transistor Q1 is the voltage across the resistor R9 and a driving voltage for the microphone 120 is transferred through the resistors R7 and R8. Preferably, it is recommended to employ a condenser microphone as the microphone 120. A typical condenser microphone usually has an inner impedance of which resistance value is 2.2KΩ and a driving voltage and current of the condenser microphone 120 are about 2V and 0.5mA, respectively. For example, taking these values as reference, the condenser microphone 120 is provided a stable voltage without a ripple if the resistors R7, R8 and R9 have 3.3KΩ, 4.7KΩ and 1MΩ. The resistor R9 works to drop the source voltage supplied from the portable telephone 20 and only about 1/10 of the source voltage is provided as the collector-base voltage of the bipolar transistor Q1.

By this impedance matching, a major portion of the power transferred by the portable telephone 20 can be transferred to the microphone 120 to provide a high sensitivity.

In amplifying the sound signal of the microphone provided through the base and transferring the amplified sound signal to the portable telephone through the collector and the microphone signal terminal t2, the bipolar transistor Q1 can have a very wide dynamic range to amplify the output sound signal of the microphone 120. Here, it should be noted that the resistance values 4.7KΩ and 1MΩ are exemplary. For the modification of the circuit, it should be considered to select the resistance value of the resistor R8 and R9 which have a minimum noise factor in view of a noise factor characteristic of the bipolar transistor Q1. If the resistor R9 has a resistance smaller than 1MΩ, an amplified current by the bipolar transistor Q1 becomes larger than the output sound signal from the microphone 120. In result, the source voltage supplied from the portable telephone attenuates the output sound signal and an amplifying performance becomes poor. So, it can be said that if resistance values of the resistors R7, R8 and R9 are determined so that a base voltage of the bipolar transistor Q1 is about half of a collector voltage of the bipolar transistor Q1, then an amplified signal with dynamic and high sensitivity can be obtained. The amplified signal of the bipolar transistor Q1 is inputted to the portable telephone 20 through the collector and the microphone signal terminal t2 and finally transmitted to a counterpart speaker.

In accordance with our test of the microphone amplifier 110 and the condenser microphone 120, a speaker can clearly communicate 3 meters away from the condenser microphone 120.

Meanwhile, an audio signal of the counterpart speaker received by the portable telephone 20 is transferred to the speaker amplifying circuit 130 through the audio signal terminal t1. The audio signal is inputted to the non-inverting terminal of the operational amplifier IC1 being superposed with the voltage source BT1 by way of resistors R1 and R2 and then is amplified with a predetermined amplifying gain. The amplified audio signal is regulated to a suitable level of voltage by the resistor R6 and capacitor C11. And, the amplified audio signal is transferred to the speaker 140 after being filtered to reject noises by the capacitor C10 and is converted into sound through the speaker 140. In this signal amplification, the bypass circuit, the smoothing circuit and the noise rejection circuit function to produce a high quality sound.

As described above, since the hand-free apparatus can communicate signals with the portable telephone through the earphone jack 50, the hand-free apparatus can be universally applicable to all models of portable telephone having the earphone jack. This wide applicability or compatibility of the hand-free apparatus will not burden the users to buy a new hand-free apparatus when they have purchased a new or different model of portable telephones. Further, the present invention makes it possible to mass-produce the hand-free apparatuses and lower the production cost.

According to the present invention,-because of the microphone amplifying circuit which has a very highly sensitive amplifying characteristic by employing an impedance matching circuit configuration, the hand-free apparatus can be installed in cars at versatile positions and easily sense user's voice..

Further, the hand-free apparatus of the present invention is easily to operate and can be simply installed by connecting the plug J1 of the signal I/O line into the earphone jack J1 of the portable telephone.

While preferred embodiment of the invention has been described, it is understood that the present invention should not be limited to this preferred embodiment, but various changes and modifications can be made by one skilled in the art within the spirit and scope of the invention as hereinafter claimed.

## Claims

1. A hand-free apparatus for a portable telephone having an earphone jack, comprising:
a microphone for converting a sound into an electrical signal;
a microphone amplifying circuit for amplifying in a high sensitivity an output signal of the microphone;
a speaker amplifying circuit for amplifying an audio signal transferred from the portable telephone;
a speaker for converting an amplified audio signal from the speaker amplifying circuit into a sound; and
signal I/O line including an audio signal line connected to the speaker amplifying circuit, a microphone signal line connected to the microphone amplifying circuit, a grounding line, and a plug having terminals each of which is connected to the audio signal line, the microphone signal line and the grounding line respectively, for transferring an output signal of the microphone amplifying circuit and the audio signal from the portable telephone to the portable telephone and the speaker amplifying circuit.

2. The hand-free apparatus as claimed in claim 1, wherein the microphone amplifying circuit comprises an amplifying device for amplifying an output sound signal of the microphone and providing an amplified output sound signal to the portable telephone through the microphone signal line; and an impedance matching circuit which is arranged between the amplifying device and the microphone for matching an impedance of the amplifying device side and an inner impedance of the microphone by transferring to the microphone a maximum power out of a source voltage provided through the microphone signal line from the portable telephone so that the microphone can provide the output audio signal in a high sensitivity to the amplifying device.

3. The hand-free apparatus as claimed in claim 2, wherein the amplifying device comprises a bipolar transistor of which collector, emitter and base are connected to the microphone signal line, ground and the impedance matching circuit, respectively.

4. The hand-free apparatus as claimed in claim 3, wherein the impedance matching circuit comprises: a bias resistor connected to the base of the bipolar transistor, voltage drop resistors connected to the microphone and the collector of the bipolar transistor, a first capacitor which is connected between the base of the bipolar transistor and the microphone for providing the output sound signal to the bipolar transistor, and a second capacitor which is connected between a connection node of the voltage drop resistors and ground for filtering a noise.

5. The hand-free apparatus as claimed in claim 1, further comprising a case, wherein the microphone and the speaker are installed within the case, the microphone amplifying circuit and the speaker amplifying circuit are installed on a printed circuit board within the case, and the signal I/O line is connected to the printed circuit board and extending out of the case.

6. The hand-free apparatus as claimed in claim 5, further comprising a communication switch for providing a switching point located between the microphone signal line and the ground, a switching button thereof being exposedly installed on an outer surface of the case for changing the portable telephone into a communication mode in response to pushing of the switching button.
